# EUROPEAN PATENT APPLICATION

(11) **EP 4 383 093 A1**
(43) Date of publication of application: **12.06.2024**
(21) Application number: 22212090.9
(22) Date of filing: 07.12.2022
(51) Int. Cl.: G06F 16/55, G06N 5/01, G06N 7/01, G06N 20/10, G06N 20/20, B60W 30/00, G05D 1/00, G06N 3/0464, G06N 3/09, G06V 20/56

(54) **METHOD, SYSTEM AND COMPUTER COMPUTER-READABLE MEDIUM**

(71) Applicant: Volkswagen Aktiengesellschaft, 38440 Wolfsburg (DE)
(72) Inventor: Bayzidi, Yasin, 38102 Braunschweig (DE)

(57) **Abstract**

The invention relates to a method for assessing the reliability of a prediction made by a deep neural network. The method comprises inputting (110) input data (20) to a trained deep neural network, determining (111) a class probability score of the detection, wherein the class probability score is determined by fitting of at least two multiple outlier detection methods (141, 142, 143), determining (120) whether the input data (20) is an outlier or not, comparing (130) the class probability score to a threshold value, and outputting that the prediction is reliable or not. The invention further relates to a system and a computer readable storage medium.

## Description

The invention relates to a method, a system, as well as computer-readable medium.

Advances in the development of deep neural networks (DNNs) in the recent years made vision based detection a primary tool for perception sub-systems within highly automated driving systems.

To detect objects and segment data based on semantics, these networks are usually trained based on annotated training data. The evaluation of such networks can be performed both with annotated (e.g. mean intersection over union (mloU)) and non-annotated data (e.g. temporal consistency), depending on the evaluation method requirements.

However, the final prediction of a deep neural network is usually based on a highest class score among all the classes a deep neural network can classify. Without labels annotated by humans, it is still a challenge to evaluate a meaningful probability of the determined class as being correct or incorrect.

Present approaches to determine the reliability of a prediction of a deep neural network usually suffer from requiring equally or even more calculation power than the actual prediction of the class. This hinders the implementation of such methods in real-time applications.

In particular, in automated driving applications, the evaluation of predictions of classes is important, as decisions based on these predictions could be erroneous. There may be cases where the ranking of the classes already provides options to determine the certainty of the prediction in relation to the possible options. For example, when traffic signs are detected, a classification of the speed limit of 30 km/h with 50 % and a speed limit with 70 km/h with 48 % could, based on the small difference, mean that the prediction is not sufficiently reliable to automatically determine the speed with which the vehicle should drive. However, there may even be cases where the machine learned neural network determines only a single class or a very high score for this single class and still be wrong.

Thus, there is a need for a real-time evaluation of predictions made by neural networks.

It is a problem of the present invention to at least partially eliminate the above-mentioned disadvantages known from the prior art. In particular, it is a problem of the present invention to provide a method, a system, as well as computer-readable medium which provide a fast, reliable, low computational power and economic way of establishing an evaluation of predictions made by neural networks.

The above-mentioned problem is solved by a method with the features of claim 1, a system with the features of claim 11, and a computer with the features of claim 13. Further features and details of the invention result from the corresponding dependent claims, the description and the drawings. Features and details described in connection with the method according to the invention naturally also apply in connection with the system according to the invention and/or the computer according to the invention, and vice versa in each case, so that reference is or can always be made mutually with regard to the disclosure concerning the individual aspects of the invention.

According to a first aspect of the invention, a method for assessing the reliability of a prediction made by a deep neural network is provided. The method comprises
- inputting input data to a trained deep neural network, wherein the trained deep neural network is configured to output a detection based on a highest class score, in particular by a processor that is configured to be arranged on a backend-computer and/or on a vehicle,
- determining a class probability score of the detection, wherein the class probability score is determined by fitting of at least two multiple outlier detection methods, wherein the at least two multiple outlier detection methods are configured to produce the class probability score, in particular by the processor,
- determining, based on the class probability score, whether the input data is an outlier or not, in particular by the processor,
- comparing the class probability score to a threshold value, in particular by the processor,
- outputting, that the prediction is reliable if the class probability score is above the threshold value, or outputting that the prediction is not reliable if the class probability score is below the threshold value, in particular by the processor.

In other words, the first aspect of the invention relates to a method for determining whether a prediction of a neural network is sufficiently valid. A deep neural network is used to make a prediction, in particular a class prediction. The probability of this prediction is assessed by using at least two multiple outlier detection methods, wherein an evaluation is performed regarding whether the input data is an outlier or not, wherein a score is provided which is related to the chance of the input data being an outlier or not. Based on this chance, the method provides an assessment of whether the prediction made by the deep neural network is valid.

In the context of the present invention, a deep neural network can have more than one layer between input and output. In particular, the deep neural network can have at least 10 or preferably at least 100 layers between input and output. Further, the deep neural network can be configured as a convolutional neural network. Convolutional neural networks have the advantage of reducing the risk of overfitting and may have a better performance than a network with fully connected layers.

Input data can be any form of digitized information. This input data can be represented as a feature vector x. The input data can be data from a sensor, in particular from a sensor that is arranged on a car. For example, the input data could comprise an image, in particular of a traffic sign. Further examples are discussed in detail below.

In the context of the present invention, a detection of the trained deep neural network can be regarded as any form of prediction or evaluation. As an example, if an image taken from a camera mounted on a car is provided as input data for the deep neural network, the deep neural network may be configured to output a class score of traffic signs visible in the image, e.g. a "30 km/h" speed limit sign.

A class score can be considered to be a numerical value for the prediction of the deep neural network. For example, a class score could be 0.7 for a prediction of a "30 km/h" speed limit traffic sign. It can be provided that multiple labels can be predicted for one feature vector. For example, a single image could be labelled with "traffic sign", "30 km/h" and "restriction relevant for this vehicle (car)". As an alternative or additionally, images can also be segmented before being added as a feature vector in the deep neural network. The highest class score determined by the deep neural network represents the prediction made by the deep neural network. Examples of such predictions can e.g. be "red traffic light" or "car moving with 50 km/h in 15 m distance".

A class probability score of the detection can be regarded as a numerical value representing a certainty of the prediction made by the deep neural network. In other words, the class probability score can be seen as a measure of the certainty and/or uncertainty of the data.

An outlier can be defined as an observation that does not conform to a model suggested by the homogeneous majority of the observations in a data set.

A multiple outlier detection method can be configured to determine whether output data of a deep neural network is an outlier or not. For a single outlier detection, the output could e.g. be whether the input data is within the class (no outlier) or not (detection of an outlier). In multiple outlier detection methods, the last layer of the deep neural network can associate the input data to more than one class. Nonetheless, there may still be outliers outside of all possible classes. Multiple outlier detection methods are configured to determine whether the input data is outside of these classes. Examples of multiple outlier detection methods are discussed in more detail below.

A threshold value can be regarded as a value that is configured to be an engineered numerical value that represents a limit between a prediction of the deep neural network that can be trusted or not, that is specific to the prediction. For example, a prediction of a present weather state might require a lower threshold value compared to a prediction of a sufficient distance to a car for an emergency brake manoeuvre.

In the context of the present invention, outputting can be regarded as the transfer of information, whether the prediction made by the deep neuronal network is reliable or not. It can be provided that this information is used in a subsequent decision. This subsequent decision can in particular be a control command in a vehicle, in particular at least one of a velocity, a direction, or a manoeuvre, such as overtaking a vehicle, stopping in front of a traffic light or changing lanes.

In summary, the present invention allows to determine the reliability of a prediction of a deep neural network at relatively low computational cost. This results in the applicability of the method in real-time situations, such as self-driving or partly self-driving vehicles.

Within the scope of the invention, it is further conceivable that the class probability score is determined with respect to the at least two classes. In other words, two or more classes can be determined by the deep neural network. Determining at least one class allows to further evaluate the determined classes. Determining at least two classes has the advantage that multiple features can be used from a single input datum, i.e. an input feature vector.

Within the scope of the invention, it is further conceivable that at least one of the at least two multiple outlier detection methods is:
- a gaussian mixture model,
- a one class support vector machine,
- a local intrinsic dimensionality,
- a k-Means clustering,
- a Mahalanobis distance, or
- an isolation forest.

A gaussian mixture model (GMM) can be configured to allow for each input feature vector to be a member of several clusters with different membership scores. In particular, the Gaussian mixture model can comprise a weighted sum of several multivariate normal distributions. A gaussian mixture model has the advantage of performing well with patch-wise shapes of images and clusters.

A one class support vector machine (SVM) has the advantage of being adaptable to the specific task and of performing well for input data that comprises noise. It can be provided that a hinge loss function is implemented. This has the advantage of providing a reliable way to deal with noisy input data.

A local intrinsic dimensionality provides the possibility of making use of the fact that the input data is distributed on a lower-dimensional manifold when only considering a nearby subset of the data.

K-Means clustering algorithms are efficient and converge quickly in comparison to other models.

Mahalanobis distance has the advantage of providing a very good performance, in particular with highly imbalanced input data.

Isolation forest explicitly isolates anomalies using binary trees. It has the advantage of being fast by directly targeting anomalies without profiling all normal instances. In particular, it is most efficient in high volume data and consumes very low memory.

It is further conceivable that at least two of the at least two multiple outlier detection methods differ from each other, wherein in particular a first multiple outlier detection method is isolation forest and a second outlier detection method is a one class support vector machine. In other words, two different multiple outlier detection methods may be applied to determine a class probability score. This has the advantage that preferable properties of different multiple outlier detection methods can be combined to obtain a more reliable and/or efficient result for the validity of the prediction.

To use an isolation forest for the first multiple outlier detection and a one class support vector machine for the second outlier method has the advantage that this model would perform well for data that includes noise (one class support vector machine performing well) as well as data that has a large volume (isolation forest performing well).

It can further be advantageously provided that at least two of the at least two multiple outlier detection methods are of the same type, wherein different subsets of the input data are prepared and each of the different subsets is input in an outlier detection method of the same type, in particular wherein the two multiple outlier detection methods are an isolation forest. In other words, two and/or all of the multiple outlier detection methods are of the same type and the input data is separated into at least two different input data parts, wherein the different parts are applied to the multiple outlier detection methods of the same type. This has the advantage that the best multiple outlier detection method can be used for a specific type of input data and that at the same time, the correlation between the methods can be reduced without using different multiple outlier detection methods.

Further, it can be provided that the subsets of the input data are selected by feature bagging. In other words, the subgroup of the input data may be chosen by feature bagging (also known as random subspace method or attribute bagging). Feature bagging has the advantage of avoiding focussing too strongly on features that are highly predictive/descriptive in the training data, but fail to be as predictive for points outside that set. This way, the correlation between the methods can be reduced without using different multiple outlier detection methods.

It can further be provided that a meta multiple outlier detection method is provided, which receives at least two probability scores from the at least two multiple outlier detection methods and determines a meta probability score. In other words, the method may comprise determining the class probability score on the basis of a probability score that is specific to the at least two probability scores from the at least two multiple outlier detection methods. This has the advantage that the results of all multiple outlier detection methods are used. For example, the meta probability score can be the average of the results from the at least two multiple outlier detection methods. Using the average is a computationally efficient way of obtaining a class probability score that is a meta probability score of the multiple outlier detection methods. Alternatively or in addition, more complex variations of determining the meta probability score may be provided, including further outlier detection methods.

Furthermore, a method according to the invention may advantageously provide that the input data comprises information of at least a traffic signal, a traffic light, a traffic participant, in particular a pedestrians or a vehicle, and/or wherein the input data is at least an image, a radar sensor signal, a LIDAR sensor signal or an ultrasonic sensor signal. In other words, the input data can be data of a vehicle and/or be related to a data of a vehicle. This has the advantage of using the real-time capabilities of the inventive method in a situation where quick, reliable decision making is important to ensure the safety and comfort of the passengers in the vehicle.

It is further conceivable the at least two multiple outlier detection methods are fitted to the activation of the output layer of the trained deep neural network. In other words, the activation of the output layer of the deep neural network making the prediction, in particular a fully connected layer, can be used as input data for the at least two multiple outlier detection methods. This provides the advantage of a lean, efficient architecture for the implementation of the multiple outlier detection methods to the deep neural network.

Furthermore, it is conceivable that the at least two multiple outlier detection methods are fitted to the activation of the output layer of the trained deep neural network. That is, the output data of the last layer of the deep neural network can be used for fitting the at least two multiple outlier detection methods. This has the advantage that no further data processing steps are conducted, which would require further computational power and also slowing down the process of determining the validity of the prediction made by the deep neural network.

According to a further aspect of the invention, a system for assessing the reliability of a prediction made by a neural network is provided, comprising a processor and a data storage, wherein the data storage comprises instructions which, when executed by the processor, cause the processor to:
- input input data to a trained deep neural network, wherein the trained deep neural network is configured to output a detection based on a highest class score,
- determine a class probability score of the detection,
   wherein the class probability score is determined by fitting of at least two multiple outlier detection methods, wherein the at least two multiple outlier detection methods are configured to produce the class probability score,
- determine, based on the class probability score, whether the input data is an outlier or not,
- compare the class probability score to a threshold value,
- output that the prediction is reliable if the class probability score is above the threshold value, or outputting that the prediction is not reliable if the class probability score is below the threshold value.

As a consequence, the system according to the invention has the same advantages which are discussed in detail in connection to the method according to the invention.

Further, it is conceivable that the processor and the data storage are configured to be arranged in a vehicle, and/or that the system comprises a vehicle with the processor and the data storage. That is, the means for performing the method can be arranged on a computer that is part of the vehicle or that the vehicle is part of the system itself.

It can also be provided that the training of the deep neural network or training of further parts of the model are performed on a computer that is a backend computer which is not arranged on a vehicle. This provides the advantage that the training steps, which usually require large computational power and resources, are performed at a location where high energy consumption and weight do not pose a problem.

According to a further aspect of the invention, a computer-readable medium is provided, comprising instructions which, when executed by a computer, in particular by a processor that is arranged in a car, cause the computer to carry out the method according to the invention.

As a consequence, the computer-readable medium provides the same advantages that are discussed in detail in relation to the method according to the invention and/or the system according to the invention.

Further aspects of the invention can also comprise a computer program and/or a computer program product, which also provides the same features and advantages that are discussed in detail in relation to the method according to the invention and/or the system according to the invention.

Further advantages, features and details of the invention will be apparent from the following description, in which embodiments of the invention are described in detail with reference to the drawings. In this connection, the features mentioned in the claims and in the description may in each case be essential to the invention individually or in any combination.
- Fig. 1:: shows a schematic representation of an embodiment of the method according to the invention,
- Fig. 2:: shows a schematic representation of a connection of the multiple outlier detection methods, and
- Fig. 3:: shows a schematic representation of a system according to the invention.

In the following description of some embodiments of the invention, the identical reference signs are used for the same technical features even in different embodiments.

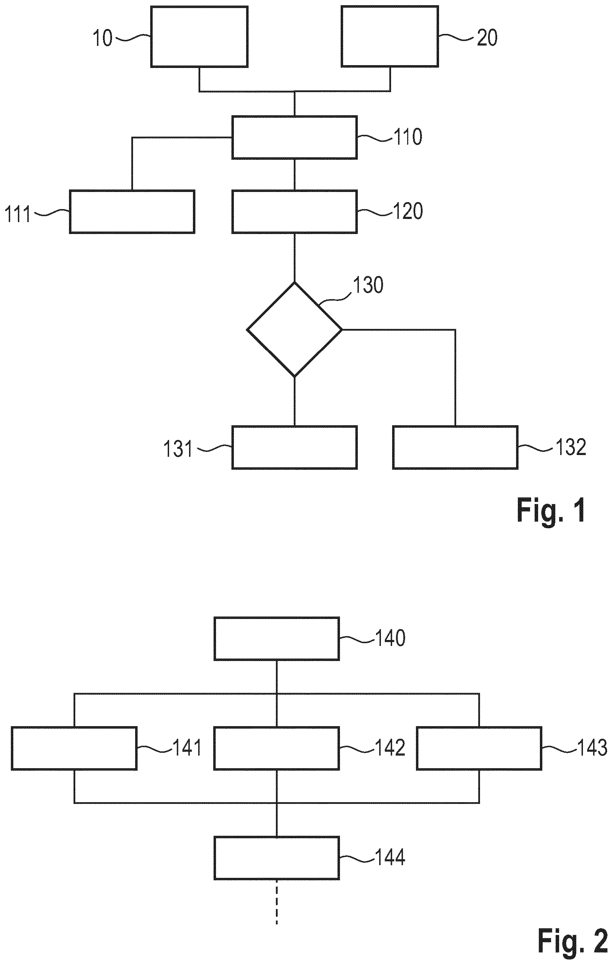

Figure 1 shows a schematic representation of a method according to the invention. This method for assessing the reliability of a prediction made by a deep neural network, comprises inputting 110 input data 20 to a trained deep neural network, wherein the trained deep neural network is configured to output a detection based on a highest class score. Further, the method comprises determining 111 a class probability score of the detection, wherein the class probability score is determined by fitting of at least two multiple outlier detection methods 141, 142, 143, wherein the at least two multiple outlier detection methods 141, 142, 143 are configured to produce the class probability score. The method also comprises determining 120, based on the class probability score, whether the input data 20 is an outlier or not and comparing 130 the class probability score to a threshold value. Additionally, the method comprises outputting that the prediction is reliable if the class probability score is above the threshold value 131, or outputting that the prediction is not reliable if the class probability score is below the threshold value 132.

As a result, this method according to the invention allows to determine the reliability of a prediction of a deep neural network at relatively low computational cost. This results in the applicability of the method in real-time situations, such as self-driving or partly self-driving vehicles.

An exemplary embodiment of the method comprises:
(1) Extracting activations of a latest deep neural network layer, in particular of a convolutional neural network layer, for a complete training dataset,
(2a) Fitting results from multiple outlier detection methods 141, 142, 143 are fitted to the results from the last deep neural network layer wherein the multiple outlier detection methods 141, 142, 143 produce probability scores,
(2b) Calculate the probability scores of the multiple outlier detection methods 141, 142, 143 and choosing the ones which get a better detection rank,
(3) Training a meta outlier detector trained on the probability scores from (2a, 2b) to get a final detection decision if a data point is an outlier or not,
(4) Extracting, for every new data point inferred to the deep neural network, the same deep neural network layer activations that are extracted and based on (1),
(5) Estimating the probability score of the results from (4) is with respect to the class clusters using the proposed class-id from the deep neural network's final prediction by inferring into (2) and then (3),
(6) Outputting, if the probability score estimated in step (5) is less than the threshold calculated in step (3), that the final prediction is considered as "not reliable" or, if the probability score estimated in step (5) is more than the threshold calculated in step (3), that the final prediction is considered as "reliable".

Preferably, the probability scores in step (2a, 2b) are calculated in a way that requires minimum computation power in the vehicle 200.

The decision if a prediction made by the deep neural network, in particular of an automated driving system in a vehicle 200, is reliable or not can be made by the above-mentioned six steps. In particular, steps one to three can be performed during the creation of the system in a backend system, while steps four to six can be performed in the vehicle 200 during the runtime, as these require minimum computational power.

A method according to the invention has the advantage of being applicable to different detection tasks such as semantic segmentation, 2D and 3D object detection. Also, the results can be used for safety argumentation of deep neural networks based on various difficulty level data points.

Fig. 2 shows another schematic of a part of the method according to the invention. It can be seen that multiple outlier detection methods 141, 142, 143 are provided and that input data 20 is input 140 into these multiple outlier detection methods 141, 142, 143.

It can be provided that at least two of the at least two multiple outlier detection methods 141, 142, 143 differ from each other, wherein in particular a first multiple outlier detection method 141 is isolation forest and a second multiple outlier detection method 142 is a one class support vector machine.

Additionally or alternatively, it can be provided that at least two of the at least two multiple outlier detection methods 141, 142 are of the same type, wherein different subsets of the input data 20 are prepared and each of the different subsets is input in an outlier detection method 141, 142, 143 of the same type, in particular wherein the two multiple outlier detection methods 141, 142 are an isolation forest.

In this case, the subsets of the input data 20 can be selected by feature bagging.

As can be seen in the lower part of Figure 2, it can be provided that a meta multiple outlier detection method 144 is provided, which receives at least two probability scores from the at least two multiple outlier detection methods 141, 142, 143 and determines a meta probability score.

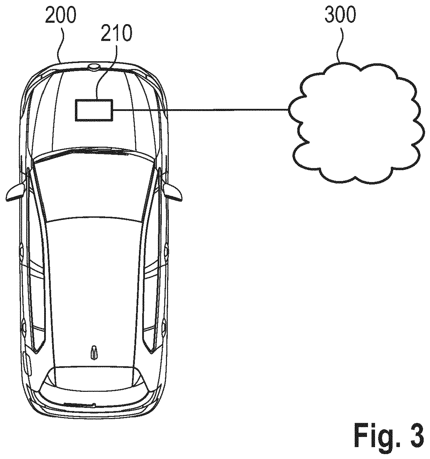

Fig. 3 represents an environment in which a system as well as a computer readable storage medium according to the invention can be applied.

A system according to the invention is configured for assessing the reliability of a prediction made by a deep neural network and comprises a processor and a data storage. The processor and data storage can be regarded as a computer 210. This computer 210 can be arranged on a vehicle 200. The data storage comprises instructions which, when executed by the processor, cause the processor to:
- input input data to a trained deep neural network, wherein the trained deep neural network is configured to output a detection based on a highest class score,
- determine a class probability score of the detection,
   wherein the class probability score is determined by fitting of at least two multiple outlier detection methods 141, 142, 143, wherein the at least two multiple outlier detection methods 141, 142, 143 are configured to produce the class probability score,
- determine, based on the class probability score, whether the input data is an outlier or not,
- compare the class probability score to a threshold value,
- output that the prediction is reliable if the class probability score is above the threshold value 131, or outputting that the prediction is not reliable if the class probability score is below the threshold value 132.

It is further conceivable that the system comprises the vehicle 200 with the processor and the data storage.

Further, it is possible that at least parts of the method are performed in a backend or cloud 300. In particular, training of the deep neural network and/or the fitting of the multiple outlier detection methods 141, 142, 143 can be performed in the backend or cloud 300.

The foregoing explanation of the embodiments describes the present invention exclusively in the context of embodiments. Of course, individual features of the embodiments may be freely combined with one another, provided that this is technically expedient, without departing from the scope of the present invention.

### Reference signs

- 10: Input training data
- 20: Input data

- 110: Inputting
- 111: Determining (a class probability score)
- 120: Determining (outlier)
- 130: Comparing
- 131: Probability score above the threshold
- 132: Probability score below the threshold

- 140: Input data
- 141: First multiple outlier detection method
- 142: Second multiple outlier detection method
- 143: Third multiple outlier detection method
- 144: Meta multiple outlier detection method

- 200: Vehicle
- 210: Computer

- 300: Cloud

## Claims

1. Method for assessing the reliability of a prediction made by a deep neural network, comprising:
- Inputting (110) input data (20) to a trained deep neural network, wherein the trained deep neural network is configured to output a detection based on a highest class score,
- determining (111) a class probability score of the detection,
wherein the class probability score is determined by fitting of at least two multiple outlier detection methods (141, 142, 143), wherein the at least two multiple outlier detection methods (141, 142, 143) are configured to produce the class probability score,
- determining (120), based on the class probability score, whether the input data (20) is an outlier or not,
- comparing (130) the class probability score to a threshold value,
- outputting that the prediction is reliable if the class probability score is above the threshold value (131), or outputting that the prediction is not reliable if the class probability score is below the threshold value (132).

2. Method according to claim 1,
**characterized in that**,
the class probability score is determined with respect to the at least two classes.

3. Method according to claim 1 or 2,
**characterized in that**,
at least one of the at least two multiple outlier detection methods (141, 142, 143) is:
- a gaussian mixture model,
- a one class support vector machine,
- a local intrinsic dimensionality,
- a k-Means clustering,
- a Mahalanobis distance, or
- an isolation forest.

4. Method according to one of the preceding claims,
**characterized in that**,
at least two of the at least two multiple outlier detection methods (141, 142, 143) differ from each other, wherein in particular a first multiple outlier detection method (141) is isolation forest and a second multiple outlier detection method (142) is a one class support vector machine.

5. Method according to one of the preceding claims,
**characterized in that**,
at least two of the at least two multiple outlier detection methods (141, 142) are of the same type, wherein different subsets of the input data (20) are prepared and each of the different subsets is input in an outlier detection method (141, 142, 143) of the same type, in particular wherein the two multiple outlier detection methods (141, 142) are an isolation forest.

6. Method according to claim 5,
**characterized in that**,
the subsets of the input data (20) are selected by feature bagging.

7. Method according to one of the preceding claims,
**characterized in that**,
a meta multiple outlier detection method (144) is provided, which receives at least two probability scores from the at least two multiple outlier detection methods (141, 142, 143) and determines a meta probability score.

8. Method according to one of the preceding claims,
**characterized in that**,
the input data (20) comprises information of at least a traffic signal, a traffic light, a traffic participant, in particular a pedestrians or a vehicle (200), and/or
wherein the input data (20) is at least an image, a radar sensor signal, a LIDAR sensor signal or an ultrasonic sensor signal.

9. Method according to one of the preceding claims,
**characterized in that**,
the at least two multiple outlier detection methods (141, 142, 143) are fitted to the activation of the output layer of the trained deep neural network.

10. Method according to one of the preceding claims,
**characterized in that**,
the at least two multiple outlier detection methods (141, 142, 143) are fitted to the activation of the output layer of the trained deep neural network.

11. System for assessing the reliability of a prediction made by a deep neural network, comprising a processor and a data storage, wherein the data storage comprises instructions which, when executed by the processor, cause the processor to:
- input input data (20) to a trained deep neural network, wherein the trained deep neural network is configured to output a detection based on a highest class score,
- determine a class probability score of the detection,
wherein the class probability score is determined by fitting of at least two multiple outlier detection methods (141, 142, 143), wherein the at least two multiple outlier detection methods (141, 142, 143) are configured to produce the class probability score,
- determine, based on the class probability score, whether the input data (20) is an outlier or not,
- compare the class probability score to a threshold value,
- output that the prediction is reliable if the class probability score is above the threshold value (131), or outputting that the prediction is not reliable if the class probability score is below the threshold value (132).

12. System according to claim 11,
**characterized in that**,
the processor and the data storage are configured to be arranged in a vehicle (200), and/or **in that** the system comprises a vehicle (200) with the processor and the data storage.

13. Computer-readable medium comprising instructions which, when executed by a computer (210), in particular by a processor that is arranged in a car, cause the computer (210) to carry out the method of one of claims 1 to 10.
